# EUROPÄISCHE PATENTSCHRIFT

(11) **EP 3 349 569 B1**
(45) Veröffentlichungstag und Bekanntmachung des Hinweises auf die Patenterteilung: **04.12.2019**
(21) Anmeldenummer: 16766542.1
(22) Anmeldetag: 15.09.2016
(51) Int. Cl.: F16H 3/66, A01K 5/00, F16H 3/54

(54) **FUTTERMISCHER**
FEED MIXER
MIXEUR POUR FOURRAGE

(30) Priorität: 18.09.2015 DE 202015104960 U
(43) Veröffentlichungstag der Anmeldung: 25.07.2018
(73) Patentinhaber: Trioliet B.V., 7575 BE Oldenzaal (NL)
(72) Erfinder: LIET, Cornelis Hendricus, 7581 PJ Losser (NL)
(74) Vertreter: Grünecker Patent- und Rechtsanwälte PartG mbB
(86) Internationale Anmeldenummer: PCT/EP2016/071824
(87) Internationale Veröffentlichungsnummer: WO 2017/046244

(56) Entgegenhaltungen:
- EP-A1- 0 880 890
- EP-A1- 1 660 789
- US-A1- 2008 207 374

## Beschreibung

Die Erfindung betrifft einen Futtermischer der im Oberbegriff des Anspruchs 1 angegebenen Art.

Futtermischer, die stationär oder mobil eingesetzt werden, haben ein Getriebe, das sich zwischen mindestens zwei Übersetzungen umschalten lässt, um das Mischorgan oder die Mischorgane zum Mischen und Schneiden des Futters mit hohem Drehmoment langsam anzutreiben, und bei sich leerender Mischkammer das Mischorgan oder die Mischorgane mit niedrigerem Drehmoment aber höherer Geschwindigkeit zum Ausschleudern (clean out) antreiben zu können. Dabei ist es wichtig, dass das Getriebe zugkraftunterbrechungsfrei schaltet, damit das Mischorgan beim Schaltvorgang nicht stehenbleibt und beim neuerlichen Anlaufen ein extremes Anlauf-Gegendrehmoment erzeugt.

Bei dem aus EP 0 880 890 A1 bekannten Futtermischer ist das Getriebe ein Planetengetriebe mit zwei in das Planetengetriebe innen eingegliederten, hydraulischen Kupplungen. Die Kupplungen werden im Wesentlichen gleichzeitig und gegensinnig geschaltet. Die eine Kupplung verbindet zwei der drehbaren Komponenten des Planetengetriebes, während die andere Kupplung ausgerückt ist. Die andere Kupplung verbindet eine der drehbaren Komponenten mit dem Gehäuse, während die eine Kupplung ausgerückt ist. Die beiden Kupplungen sind baulich schwierig in das Planetengetriebe zu integrieren, und erfordern viele Zusatzkomponenten wie Ölpumpen, Kühlsysteme, elektronische Steuerungen und dergleichen, um exakt schalten zu können. Die Kupplungen erzeugen wegen des hohen, zu übertragenden Drehmoments viel Wärme, wobei die einrückende Kupplung mehr Wärme erzeugt als die ausrückende Kupplung. Dadurch kann das Greifverhalten zwischen den Kupplungen unkontrolliert variieren und eine Verschleiß im Planetengetriebe begünstigende, schlechte Wärmebilanz erzeugen. Die hydraulischen Kupplungen sind ferner wartungsintensiv. Unter der ungünstigen Wärmebilanz bzw. lokalen Wärmenestern leidet das Hydraulikmedium, das relativ häufig gewechselt werden muss. Bei Futtermischern mit mehr als einem Mischorgan ist für jedes Mischorgan ein solches aufwändiges schaltbares Planetengetriebe erforderlich. Bei einer anderen Ausführungsform ist ein hydraulischer Hilfsmotor vorgesehen, der über ein weiteres Getriebe, das mit einer zusätzlichen Außenverzahnung ausgebildete Außenrad des Planetengetriebes von außen entweder mechanisch blockiert oder mit variabler Geschwindigkeit dreht, um die Ausgangsgeschwindigkeit des Planetengetriebes stufenlos zu verändern. Dieses Konzept ist baulich außerordentlich aufwändig und kann zu häufigen Störungen neigen. Das bekannte Planetengetriebe ist teuer und für kleinere Futtermischer beispielsweise mit einer Kapazität von 16 bis 30 m³ aus Preisgründen unzweckmäßig.

EP 1 660 789 A0 (WO 2005/019697 A) offenbart ein Traktoren-Automatik-Getriebe mit einem Drehmomentwandler und zwei über wahlweise von einer Steuerung ein- und ausrückbare Hydraulikkupplungen hintereinandergeschalteten Planetengetrieben. Der drehbare Planetenradträger des zweiten Planetengetriebes ist mit einer Bremse wahlweise blockierbar. Die Art der Bremse wird als bekannt vorausgesetzt. Komponenten des Getriebes werden von mehreren, mit einer Steuerung verbundenen Sensoren überwacht. Die Betätigung der Bremse zum Blockieren des Planetenradträgers hat keinen Einfluss auf die Betätigung der Hydraulikkupplungen.

US 2008/0207374 A1 offenbart eine Hybrid-Antriebseinheit eines Hybrid-Fahrzeugs mit einem Verbrennungsmotor, zwei elektrischen Motor/Generatoren und zwei Planetengetrieben. Drehbare Sonnenräder in den eine ein- und ausrückbare Hydraulikkupplung enthaltenden Planetengetrieben können wahlweise mit ersten, zweiten und dritten hydraulischen Mehrscheiben-Reibungs-Bremsen im Getriebegehäuse blockiert werden. Die Kupplung und die Bremsen werden von einer hydraulischen Steuereinheit und einem Steuercomputer betätigt. Komponenten der Antriebseinheit werden von mehreren, mit dem Steuercomputer verbundenen Sensoren überwacht. Die Betätigung der hydraulischen Mehrscheiben-Reibungs-Bremsen hat keinen Einfluss auf die Betätigung der Hydraulikkupplung.

Bei dem aus EP 1 561 971 A1 bekannten Futtermischer ist in einer Ausführungsform im Planetengetriebe zumindest ein Rollenfreilauf sowie ein hydraulischer Hilfsmotor verbaut, der zum Aktivieren des Freilaufs über ein zusätzliches Stellrad auf die Planetenräder im Planetenträger einwirkt.

Aus US 5,462,354 A ist ein Futtermischer bekannt, bei dem das einzige Mischorgan über ein Planeten-Winkelgetriebe angetrieben wird, das über eine Gelenkwelle an ein von der Zapfwelle des Schleppers angetriebenes, automatisches Getriebe angeschlossen ist. Alternativ kann anstelle des Automatikgetriebes ein verstellbarer Hydromotor vorgesehen sein.

Der Erfindung liegt die Aufgabe zugrunde, einen Futtermischer der eingangs genannten Art mit einem baulich einfachen, schaltbaren Planetengetriebe auszustatten, das es ermöglicht, ein einfaches, betriebssicheres und wartungsarmes Antriebssystem, speziell für kleinere Futtermischer, zu verwenden, und zwar zu einem günstigen Preis und ohne aufwändige Zusatzkomponenten oder Steuerungen.

Die gestellte Aufgabe wird mit den Merkmalen des Anspruchs 1 gelöst.

Die einzige Kupplung lässt sich einfach im Planetengetriebe integrieren und ist funktionssicher und weitestgehend unempfindlich gegen Wärme. Das Gleiche gilt für die am oder im Gehäuse angeordnete Bremse, die eine Doppelfunktion ausführt, in dem sie eine der Komponenten des Planetengetriebes durch Reibung blockieren kann, und beim Blockieren bzw. bei der Betätigung mit einer Stellbewegung gleichzeitig die Kupplung ausrückt. Das Planetengetriebe baut kompakt, ist kostengünstig und wartungsarm. Es erfüllt die Anforderungen in einem Futtermischer nahezu ideal mit minimalem Aufwand, was im Besonderen bei kleineren Futtermischern preisgünstig ist und wenig Bauraum erfordert. Dabei kann ein Planetengetriebe bei mehreren Mischorganen oder mehreren Mischkammern vor jedem Mischorgan vorgesehen sein, oder zentral mehrere Mischorgane antreiben.Die Bremse kann steuerungstechnisch einfach allein durch einen Druckimpuls hydraulisch betätigt werden und benötigt keine aufwändigen Zusatzkomponenten oder Steuerungsteile, ist funktionssicher und wartungsarm. In besonders zweckmäßiger Weise lässt sich die Bremse sogar mechanisch betätigen, so dass das Planetengetriebe ohne Hydrauliksystem schaltbar ist, ohne die Zugkraft beim Schalten zu unterbrechen. Dabei ist die Kupplung eine Reibungskupplung und durch Federkraft einrückbar. Das Ausrücken erfolgt mit der Stellbewegung der betätigten Bremse. Diese kann mechanisch, hydraulisch, pneumatisch oder elektrisch betätigt werden.

Besonders zweckmäßig ist die Bremse einer Scheibenbremse, die zuverlässig, leistungsstark und unempfindlich ist, und bei ihrer Betätigung eine Stellbewegung ausführt, die vorteilhaft zum Ausrücken der Kupplung nutzbar ist. Alternativ können andere Bremsen verwendet werden, aus deren Betätigung sich eine Stellbewegung ableiten lässt.

Bei einer zweckmäßigen Ausführungsform ist die zum Ausrücken der Kupplung eingesetzte Bremskraft der Bremse größer als die Federkraft zum Einrücken der Kupplung, so dass die Kupplung rasch und gleichförmig ausgerückt wird und dennoch genügend Bremskraft zum Blockieren der Komponente des Planetengetriebes verbleibt. Dabei wird mit der Bremskraft der Bremse eine axiale Stellbewegung erzeugt, die im Planetengetriebe direkt mechanisch auf die Kupplung übertragen wird, so dass die Kupplung und die Bremse weitestgehend gleichzeitig und sehr rasch zwischen den Übersetzungen umschalten. Dabei wirkt zweckmäßig die Bremse auf einem relativ großen Durchmesser, so dass eine moderate Bremskraft zum zuverlässigen Blockieren ausreicht und ein genügend großer Anteil der Bremskraft zum Ausrücken der Kupplung zur Verfügung steht.

Für die Ausbildung des Planetengetriebes bieten sich z.B. zwei Konzepte an. Die Kupplung kann zwischen dem Sonnenrad und dem Planetenradträger angreifen, während die Bremse am Sonnenrad angreift. Alternativ kann die Kupplung zwischen dem Planetenradträger und dem Außenrad angreifen, die Bremse am Außenrad. Dies soll aber nicht ausschließen, die Kupplung gegebenenfalls zwischen dem Sonnenrad und dem Außenrad anzuordnen und die Bremse am Planetenradträger angreifen zu lassen. Zweckmäßig wird das Planetengetriebe so verbaut, dass es zum Mischorgan entweder 1:1 oder langsamer antreibt.

Bei einer zweckmäßigen Ausführungsform sind eine im Gehäuse gelagerte zweite Welle mit dem Außenrad oder dem Sonnenrad und eine erste koaxiale und ebenfalls im Gehäuse gelagerte Welle mit dem Planetenradträger oder dem Außenrad verbunden. Das Sonnenrad oder das Außenrad kann z.B. auf der ersten Welle oder zweiten Welle und dem Planetenradträger gelagert sein. Dies ist nicht beschränkend aufzufassen, da viele andere Lagerungsprinzipien für die drehbaren Komponenten des Planetengetriebes ebenfalls möglich sind. Um eine gewollte Untersetzung an der Ausgangswelle sicherzustellen, hier der ersten Welle, ist immer der Planetenradträger mit der Ausgangswelle verbunden.

Zweckmäßig weist die Kupplung wechselweise mit den zwei Komponenten drehfest verbundene, verschiebbare Kupplungs-Ringlamellen auf, die zwischen einer durch die Stellbewegung, abgegriffen von der Bremse, axial beweglichen Kupplungsdruckplatte und einem Anschlag in einer der zwei Komponenten angeordnet sind. Die Federkraft der Kupplung wirkt auf die Kupplungsdruckplatte ein, die rein mechanisch fungiert.

Für den Fall, dass im Futtermischer mehr als zwei schaltbare Geschwindigkeitsstufen erforderlich sind, können zwischen den ersten und zweiten Wellen mindestens zwei vorzugsweise verschieden große Planetengetriebe hintereinander geschaltet sein, deren jedes eine mechanische Kupplung mit Federbetätigung und eine mechanisch oder hydraulisch betätigbare Bremse aufweist. Die Bremsen können gleichzeitig oder individuell betätigt werden. Dabei wird das jeweils größere näher beim Mischorgan verbaut als das jeweils kleinere, um optimale mechanische Bedingungen zu erzielen.

In einer zweckmäßigen Ausführungsform weist die Bremse im oder am Gehäuse zwei koaxiale Scheiben und mindestens zwei gegenüberliegende, von außen gegen die Scheiben anpressbare Bremsbacken auf. Die Scheiben sind mit einer der zwei Komponenten mitdrehbar verbunden und bei eingerückter Kupplung voneinander beabstandet. Eine der Scheiben bildet entweder die von der Federkraft der Kupplung beaufschlagte Kupplungsdruckplatte, oder ist über Anschläge oder Druckstifte auf die Kupplungsdruckplatte zum Eingriff zu bringen, um die Stellbewegung zu übertragen.

Zweckmäßig sind Bremsbacken der hydraulisch betätigbaren Bremse durch Kolben in gehäusefesten Hydraulikzylindern oder der mechanisch betätigbaren Bremse durch einen Hebelmechanismus am Gehäuse betätigbar. Für die Bremsbacken kann eine oder können mehrere in Lösrichtung wirkende Rückstellfedern zweckmäßig sein.

Einer andere zweckmäßige Ausführungsform der mechanisch oder hydraulisch betätigbaren Bremse, z. B. einer Scheibenbremse, hat zwei an sich gehäusefeste, aneinander liegende Zahnscheiben jeweils mit in Umfangsrichtung verteilten, gegensinnigen und zueinander weisenden Sägezähnen, die im Gehäuse hydraulisch oder durch wenigstens einen Hebelmechanismus relativ zueinander unter Aufgleiten der keilförmigen Sägezähne und Erzeugen der Stellbewegung und der Bremskraft begrenzt verdrehbar sind. Diese relative Bewegung kann durch eine Verdrehung nur einer Scheibe oder gleichzeitige gegensinnige Verdrehungen der beiden Zahnscheiben bewirkt werden. Eine der Zahnscheiben wird unter der Stellbewegung mit einem Bremsbelag gegen die Kupplungsdruckplatte oder die mit der Kupplungsdruckplatte gekoppelte Scheibe gepresst und legt diese gegen eine Scheibe der einen Komponente, vorzugsweise des Sonnenrads, an und presst sie über einen Bremsbelag gegen wenigstens einen gehäusefesten Bremsbacken oder eine gehäusefeste Bremsfläche. Es lässt sich auf diese Weise eine genau vorherbestimmte Stellbewegung über die Keilwirkung der Sägezähne mit moderater Antriebskraft erzeugen und wird die Bremskraft mechanisch stabil abgestützt, solange die Scheibenbremse betätigt ist. Günstig ist ferner, dass die Sägezähne mit der Zeit auftretenden Verschleiß selbsttätig zu kompensieren vermögen. Falls nur eine der Zahnscheiben verdreht wird, zweckmäßig die den Bremsbacken abgewandte Zahnscheibe, kann die andere gehäusefest verankert sein.

Auf baulich einfache Weise und für eine zuverlässige, selbsthaltende Blockierstellung der betätigbaren Bremse ist es zweckmäßig, wenn der Hebelmechanismus zumindest bei betätigter Bremse am Gehäuse oder in einem Schlepper verrastet, verriegelt oder in einer selbsthaltenden Übertotpunktlage ist.

Falls die diversen Lagerungen im Planetengetriebe nicht mit Dauerschmierstoffvorräten ausgestattet sind, kann das Gehäuse ein nach außen abgedichtetes Ölbad enthalten.

Ein weiterer wichtiger Aspekt besteht darin, dass im oder am Gehäuse wenigstens ein Sensor zumindest zur Überwachung der ordnungsgemäßen blockierenden Bremsfunktion der betätigten Bremse vorgesehen ist. Dieser Sensor kann signalübertragend mit einer übergeordneten Steuerung verbunden sein, um eine Funktionsstörung sofort anzuzeigen.

Für die hydraulische Betätigung der Bremse kann auf baulich einfache Weise eine Hydraulikschaltung eine an ein magnetbetätigtes Mehrwegeventil angeschlossene Hydraulikleitung aufweisen, in der zwischen einem Stromregelventil, vorzugsweise mit einer Regelblende und einem parallelen, in Strömungsrichtung zum Mehrwegeventil öffnenden Rückschlagventil, sowie gegebenenfalls einem an die Hydraulikleitung angeschlossenen Druckspeicher, und dem Mehrwegeventil ein in Strömungsrichtung zum Mehrwegeventil sperrendes, über das Mehrwegeventil hydraulisch entsperrbares Rückschlagventil angeordnet ist. Das Mehrwegventil ist vorzugsweise ein 4/3-Wegeventil mit blockierender Neutralstellung und an eine Druckquelle und einen Rücklauf angeschlossen. Diese Hydraulikschaltung ist baulich einfach und benötigt nur wenige kostengünstige und funktionssichere Komponenten.

Zweckmäßig ist das Mehrwegeventil ein Schlepperventil im Hydrauliksystem eines an den fahrbar ausgebildeten Futtermischers oder mit dem stationär eingesetzten Futtermischer gekoppelten Schleppers, der eine Welle des Planetengetriebes beispielsweise über die Zapfwelle antreibt, und zwar mit relativ hoher Drehzahl, die über das Planetengetriebe reduziert werden kann. Alternativ kann ein Hydromotor oder Elektromotor als Antriebsquelle dienen.

Schließlich ist es für die mechanisch betätigbare Bremse günstig, wenn der Hebelmechanismus über einen Seilzug am Futtermischer oder in einem dem Futtermischer zugeordneten Schlepper betätigbar ist. Der Seilzug lässt sich von einer strategisch günstigen Stelle aus betätigen, so dass nicht direkt am ggf. schwer zugänglichen Ort des Planetengetriebes manuell angegriffen zu werden braucht.

Anhand der Zeichnung werden Ausführungsformen des Erfindungsgegenstandes erläutert. Es zeigen:
- Fig. 1: eine Seitenansicht, teilweise im Schnitt eines als nicht beschränkendes Beispiel fahrbaren Futtermischers, angekoppelt an einen Schlepper, und als nicht beschränkendes Beispiel mit zwei Mischorganen in einer Mischkammer,
- Fig. 2: einen Längsschnitt einer ersten Ausführungsform eines schaltbaren Planetengetriebes in einer Schaltstellung für eine 1:1-Übersetzung,
- Fig. 3: ein Blockschaltbild einer Hydraulikschaltung beispielsweise für das eine hydraulisch betätigbare Scheibenbremse aufweisende Planetengetriebe in Fig. 2,
- Fig. 4: eine weitere Ausführungsvariante des Planetengetriebes,
- Fig. 5: eine weitere Ausführungsform des Planetengetriebes,
- Fig. 6: eine maßstäblich vergrößerte Schnittdarstellung von Details der Ausführungsform von Fig. 5 in einer Schaltstellung,
- Fig. 7: eine Schnittdarstellung entsprechend der von Fig. 6, in einer anderen Schaltstellung,
- Fig. 8: eine perspektivische Schnittdarstellung der Schaltstellung von Fig. 7, und
- Fig. 9: eine Schnittdarstellung eines mehrstufigen Planetengetriebes zum Schalten beispielsweise zwischen drei unterschiedlichen Übersetzungen.

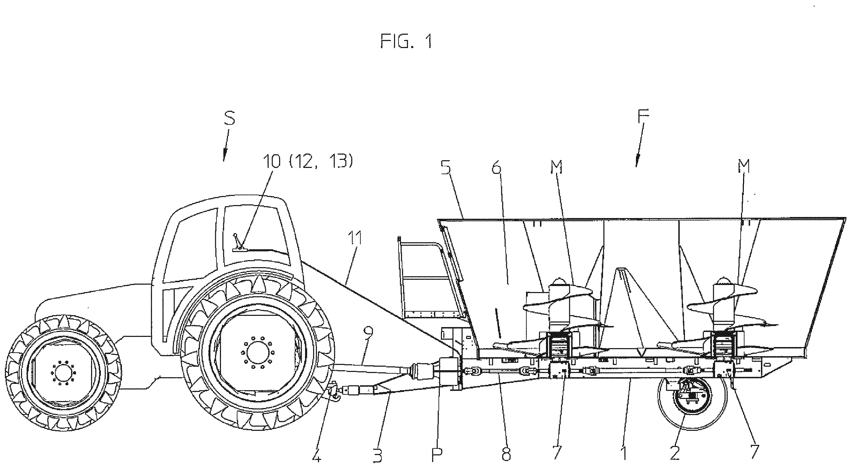

In Fig. 1 weist ein Futtermischer F einen Unterbau 1 auf, der hier beispielsweise auf Rädern 2 fahrbar ist und über eine Deichsel 3 an einen Anschluss 4 eines zugeordneten Schleppers S angekuppelt ist. Der Unterbau 1 trägt hier als Beispiel nur einen Mischbehälter 5, der eine Mischkammer 6 begrenzt, in der bei der gezeigten Ausführungsform zwei Mischorgane M, beispielsweise Mischschnecken, drehantreibbar angeordnet sind.

Der Futtermischer F könnte auch mehrere Mischbehälter, mehrere Mischkammer und noch mehr Mischorgane aufweisen, oder nur einen Behälter mit einer Mischkammer und einem Mischorgan, könnte ein Horizontalmischer, ein Paddelmischer oder ein anderer Mischer sein.

In Fig. 1 wird jedes Mischorgan M über ein Winkelgetriebe oder Winkel-Planetengetriebe 7 (z.B. mit einer Untersetzung von etwa 16:1 bis 18:1 mit einer 540 U/min.-Zapfwelle oder +/- 26:1 mit einer 1000 U/min.-Zapfwelle) von einem Gelenkwellenstrang 8 angetrieben, der zu einem am Unterbau 1 stationär verbauten Planetengetriebe P führt, das beispielsweise von einer Zapfwelle 9 des Schleppers S angetrieben wird.

Bei einer stationären Ausführungsform des Futtermischers F könnte dieser einen eigenen Antrieb für das Planetengetriebe P haben. Alternativ könnte in Fig. 1 jedes Mischorgan M von einem vor dem Winkelgetriebe 7 verbauten Planetengetriebe P angetrieben werden.

Das Planetengetriebe P ist zwischen mindestens zwei Übersetzungen und im Wesentlichen zugkraftunterbrechungsfrei schaltbar, um das jeweilige Mischorgan M mit hohem Drehmoment und relativ geringer Geschwindigkeit oder geringerem Drehmoment und höherer Geschwindigkeit anzutreiben. Hierfür deutet Fig. 1 eine Betätigung 11 zum Schalten des Planetengetriebe P an, die in der gezeigten Ausführungsform mit einer Betätigungsvorrichtung 10 im Schlepper S verbunden ist. Die Betätigungsvorrichtung 10 könnte eine hydraulische Betätigungsvorrichtung 12 oder eine mechanische Betätigungsvorrichtung 13 sein. Sie ist zweckmäßig in der jeweils eingestellten Stellung verriegelt, verrastet oder in einer Übertotpunktlage.

Bei einer nicht gezeigten Ausführungsform könnte die Betätigungsvorrichtung 10 direkt am Futtermischer M vorgesehen sein.

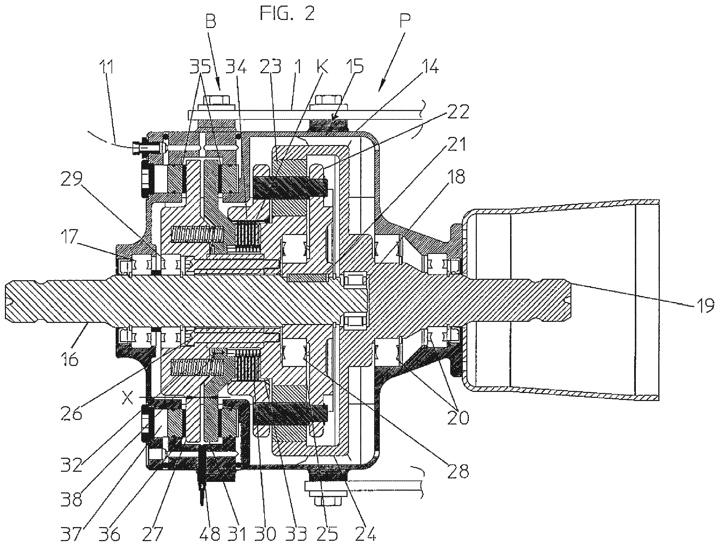

Die Ausführungsform des Planetengetriebes B in Fig. 2 ist beispielsweise an Verankerungen 15 eines Gehäuses 14 im Unterbau 1 des Futtermischers von Fig. 1 stationär festgelegt. In das Planetengetriebe P führt eine erste, mit Lagern 17 im Gehäuse 14 und Lagern 18 in einer zweiten, aus dem Gehäuse 14 herausführenden Welle 19 gelagerte Welle 16. Die zweite Welle 19 ist mit Lagern 20 im Gehäuse gelagert und mit einem eine drehbare Komponente des Planetengetriebes bildenden Außenrad 24 verbunden. Die erste Welle 16 ist beispielsweise über eine Verkeilung 21 mit einem Planetenradträger 22 als weitere drehbare Komponente verbunden, der mehrere Planetenräder 23 drehbar lagert, die in eine Innenverzahnung des Außenrades 24 kämmend eingreifen. Als weitere drehbare Komponente des Planetengetriebes P ist schließlich ein Sonnenrad 25 mit Lagern 28 hier auf dem Planetenradträger 22 und 29 auf der ersten Welle 16 drehbar gelagert, das mit den Planetenrädern 23 kämmt und über Spannschrauben 26 mit einer großdurchmessrigen Scheibe 27 verbunden ist. Zweckmäßig ist z.B. die zweite Welle 19, die Eingangswelle, hingegen die erste Welle 16 die Ausgangswelle zum Mischorgan M.

Zwischen dem Planetenradträger 22 und dem Sonnenrad 25 ist eine mechanische, durch Federkraft 32 einrückbare Kupplung K vorgesehen, die eine als Scheibe 31 ausgebildete Kupplungsdruckplatte aufweist, die von der Federkraft 32, abgestützt in der Scheibe 27, in Einrückrichtung beaufschlagt und axial beweglich ist, und eine Anordnung 30 von wechselweise mit dem Planetenradträger 22 und dem Sonnenrad 25 drehfest, aber axial verschieblich verbundenen Kupplungs-Ringlamellen 34 beaufschlagen kann, die sich an einem Anschlag 33, hier im Sonnenrad 25 abstützen. Am bzw. im Gehäuse 14 ist ferner eine Bremse, d.h. eine Reibungsbremse, vorzugsweise eine Scheibenbremse vorgesehen, in der Ausführungsform in Fig. 2 als Bremse B eine hydraulisch betätigbare Scheibenbremse.

Die Scheibenbremse weist zwei an Kolben in Zylinderräumen 37 des Gehäuses angeordnete Bremsbacken 35 auf, die von außen mit Bremsbelägen 36 auf die beiden Scheiben 31 und 27 ausgerichtet sind und über die Betätigung 11 hydraulisch beaufschlagbar sind, um an den Scheiben 27, 31 anzugreifen, diese gegen eine Drehbewegung zu blockieren, und auch über eineim Hub vorherbestimmte Stellbewegung (Pfeil 38) aneinander zu pressen, um einen in der gezeigten Einrückstellung der Kupplung K vorhandenen Zwischenabstand X zwischen den Scheiben 27, 31 zu beseitigen. Die Zylinderräume 37 sind über gemeinsame Kanäle mit der hydraulischen Betätigung 11 in Druckverbindung.

Als Option kann am Gehäuse 14 ein Sensor 48 vorgesehen sein, der beispielsweise mit einer übergeordneten Steuerung in signalübertragender Verbindung steht, und eine ordnungsgemäße blockierende Bremsfunktion der Scheibenbremse überwacht und meldet.

In der in Fig. 2 gezeigten Schaltstellung ist die Kupplung K durch die Federkraft 32 eingerückt, d.h., die Scheibe 31 der Kupplungsdruckplatte presst die Kupplungs-Ringlamellen 34 gegeneinander und gegen den Anschlag 33, so dass der Planetenradträger 22 drehfest mit dem Sonnenrad 25 gekuppelt ist. Die Bremse B ist gelöst, so dass sich die beiden Scheiben 31, 27 relativ zu den Bremsbelägen 36 drehen können. Somit wird die Drehzahl der zweiten Welle 19 1:1 auf die erste Welle 16 übertragen.

In der zweiten Schaltstellung, d.h., mit betätigter Bremse B, werden durch die Bremskraft zwischen den Bremsbacken 35 die beiden Scheiben 27, 31 gegeneinander gepresst und gegen eine Drehbewegung blockiert. Beim Überwinden des Abstandes X zwischen den Scheiben 27, 31 wird auf die Scheibe 31 der Kupplungsdruckplatte die durch einen Pfeil angedeutete Stellbewegung 38 (in Fig. 2 nach links) übertragen, die die Federkraft 32 überwindet und die Kupplungs-Ringlamellen 34 außer Reibeingriff bringt. Hierfür ist die Bremskraft der Bremse B höher als die Federkraft 32. Durch die betätigte Bremse B werden die Scheiben 27, 31 und damit das Sonnenrad 25 relativ zum Futtermischer F bzw. Gehäuse 14 festgehalten, während der mit der ersten Welle 16 gekoppelte Planetenradträger 22 relativ zum Sonnenrad 25 drehbar ist. Die zweite Welle 19 wird vorzugsweise vom Schlepper S angetrieben. Das Außenrad 24 treibt die Planetenräder 23, die den Planetenträger 22 in Drehrichtung der Antriebswelle mit niedrigenrer Drehzahl drehen, entsprechend dem Zähnezahlverhältnis zwischen dem Sonnenrad und dem Außenrad (Untersetzung z. B. 1, 7 - 1,8:1).

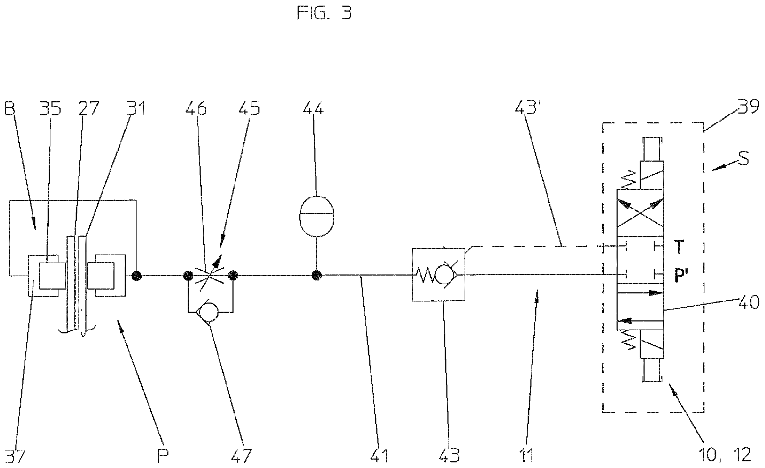

Fig. 3 verdeutlicht eine mögliche Ausführungsform einer hydraulischen Betätigung 11 für die hydraulisch betätigbare Bremse der Ausführungsform des Planetengetriebes P von Fig. 2.

Von einem in einem Hydrauliksystem 39, beispielsweise des Schleppers S, angeordneten Mehrwegeventil 40, hier einem 4/3-Wegeventil mit blockierender Neutralstellung, angeschlossen an eine Druckversorgung P' und einen Rücklauf T, erstreckt sich eine Hydraulikleitung 41 zu den Zylinderräumen 37 der hier z.B. als Scheibenbremse ausgebildeten Bremse B im Planetengetriebe P. In der Hydraulikleitung 41 ist stromab des Mehrwegeventils 40 ein hydraulisch über eine Steuerleitung 43' entsperrbares Rückschlagventil 43 vorgesehen, das in Strömungsrichtung zum Mehrwegeventil 40 sperrt. Zwischen dem Rückschlagventil 43 und den Zylinderkammern 37 kann an die Hydraulikleitung 41 ein Druckspeicher 44 angeschlossen sein, der beispielsweise nur ein Fassungsvermögen von 10 cm³ bei einem von einem nicht gezeigten Druckbegrenzungsventil begrenzten Druck von 150 bar zu haben braucht. Der Druckspeicher 44 ist eine Option. Stromauf der Zylinderkammern 37 ist in der Hydraulikleitung 41 schließlich ein Stromregelventil 45 angeordnet, das beispielsweise aus einer Regelblende 46 zum Verändern des Durchflussquerschnitts und einem umgehenden Rückschlagventil 47 besteht, das in Strömungsrichtung zu den Zylinderkammern 37 sperrt. Das Mehrwegeventil 40 ist beispielsweise magnetbetätigt und wird über die in Fig. 1 gezeigte Betätigungsvorrichtung 10, beispielsweise einem Joystick oder Schalter 12 zur hydraulischen Betätigung, angesteuert. Zu älteren Schleppern kann dieses "Schlepperventil" mit einem Hebel in der Kabine betätigt werden.

In der dargestellten blockierenden Neutralstellung des Mehrwegeventils 40 stehen die Zylinderkammern 30 z.B. unter Druck aus dem Druckspeicher 44. Das Rückschlagventil 43 sperrt. Die Hydraulikleitung 41 ist sowohl von der Druckversorgung P' als auch vom Rücklauf T isoliert. Alternativ könnten in der Neutralstellung die Zylinderkammern 30 und der Druckspeicher 44 drucklos sein.

Wird das Mehrwegeventil 40 in die untere Schaltstellung gestellt, dann ist die Hydraulikleitung 41 mit der Druckversorgung P' verbunden, hingegen die Steuerleitung 43' mit dem Rücklauf. Der in der Hydraulikleitung 41 wirkende Druck öffnet das Rückschlagventil 43, speist den Druckspeicher 44 und erzeugt zum Betätigen der Bremse B in den Zylinderkammern 37 einen vorbestimmten Druck, dessen Aufbau durch das Stromregelventil 45 geregelt wird.

Wird das Mehrwegeventil 40 in die obere Schaltstellung umgeschaltet, dann ist die Hydraulikleitung 41 mit dem Rücklauf T verbunden, hingegen die Steuerleitung 43' mit der Druckversorgung P'. Dadurch wird das Rückschlagventil 43 aufgesteuert, so dass sich der Druck, auch über das dann öffnende Rückschlagventil 47 aus den Zylinderkammern 37 relativ rasch zum Rücklauf T abbaut. Auch der Druckspeicher 44 kann sich entleeren. Die Scheibenbremse ist nicht mehr betätigt. Das Mehrwegeventil 40 ist im Übrigen zweckmäßig das sogenannte Schlepperventil, oder bei stationär eingesetztem Futtermischer F in einem Hydrauliksystem am Futtermischer selbst angeordnet und betätigbar.

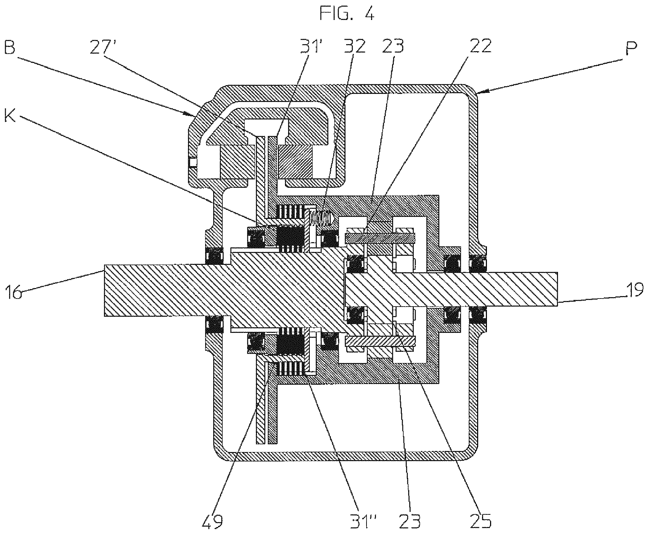

Die in Fig. 4 angedeutete Ausführungsform des Planetengetriebe P unterscheidet sich von der der Fig. 2 dadurch, dass die Kupplung K zwischen dem Außenrad 23 und dem Planetenradträger 22 vorgesehen ist, hingegen die Bremse B an einer mit dem Außenrad 23 drehfest verbundenen Scheibe 31' und der im Außenrad 23 axial beweglichen Scheibe 27' angreift. Das Sonnenrad 25 ist drehfest mit der zweiten Welle 19 verbunden, während der Planetenradträger 22 drehfest mit der ersten Welle 16 verbunden ist. Von der Scheibe 27' erstrecken sich Druckstifte 49 zu der als separate axial beweglich geführte Scheibe auf der ersten Welle 16 sitzenden Kupplungsdruckplatte 31", die von der Federkraft 32 in Einrückrichtung der Kupplung K beaufschlagt ist. Die erste Welle 16 ist in dem Außenrad 23 und auf der zweiten Welle 19 drehgelagert. Der Planetenradträger 22 ist mit der ersten Welle 16 verbunden.

In der gezeigten Einrückstellung der Kupplung K ist der Planetenradträger 22 mit dem Außenrad 23 drehfest gekuppelt. Die erste Welle 16 wird mit einer 1:1-Übersetzung von der zweiten Welle 19 angetrieben. Wird die Bremse B betätigt, dann wird die Scheibe 31' gegen die Scheibe 27' gepresst und werden beide Scheiben blockiert. Die dabei auftretende Stellbewegung 38 wird über die mechanische Verbindung 49 auf die Scheibe 31' übertragen (Kupplungsdruckplatte 31'), die die Federkraft 32 überwindet und die Kupplung K ausrückt. Die Planetenräder 23 wälzen sich auf dem drehenden Sonnenrad 25 und im Außenrad 23 ab, so dass der Planetenradträger 22 angetrieben wird und sich die erste Welle 16 mit einer niedrigeren Drehzahl als die zweite Welle 19 dreht (Untersetzung beispielsweise 1,7:1 bis 1,8:1).

In den Fig. 2 und 4 ist jeweils eine hydraulisch betätigbare Scheibenbremse dargestellt. Alternativ (nicht gezeigt) könnten die Bremsbacken 35 der Scheibenbremse jedoch mechanisch betätigt werden, beispielsweise über einen in den Fig. 2 und 4 nicht dargestellten Hebelmechanismus, zweckmäßig über einen Seilzug oder einen Handhebel oder dergleichen.

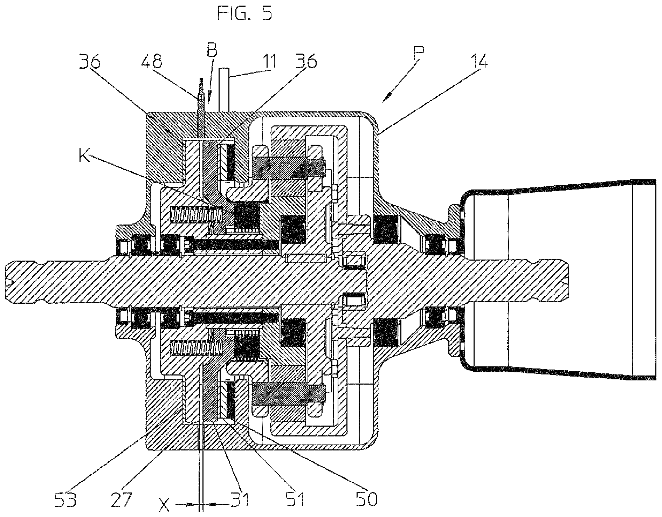

Die Ausführungsform des Planetengetriebes P in Fig. 5 unterscheidet sich von der der Fig. 2 dadurch, dass die Scheibenbremse eine andere Betätigung aufweist. Und zwar sind im Gehäuse 14 neben der Scheibe 31 (Kupplungsdruckplatte) der Kupplung K zwei koaxiale Zahnscheiben 50, 51 vorgesehen, die relativ zueinander verdrehbar sind, um die Stellbewegung 38 zum Überwinden des Abstands X zu erzeugen, die Scheiben 27, 31 zueinander zu pressen und im Gehäuse 14 zu blockieren. Es können beide Scheiben 50, 51 relativ zueinander verdrehbar sein, und zwar entweder hydraulisch oder mechanisch, oder es ist die Zahnscheibe 50 gehäusefest verbaut und nur die Zahnscheibe 51 begrenzt verdrehbar. Zu beiden Seiten der Scheiben 27, 31 können Bremsbeläge 36 vorgesehen sein, der in Fig. 5 linke Bremsbelag kann an mehreren gehäusefesten Bremsbacken oder einer Bremsfläche 53 anliegen oder angebracht sein.

Ferner ist in Fig. 5 wiederum ein Sensor 48 am Gehäuse 14 angedeutet, der zum Überwachen der korrekten blockierenden Bremsbetätigung dienen kann.

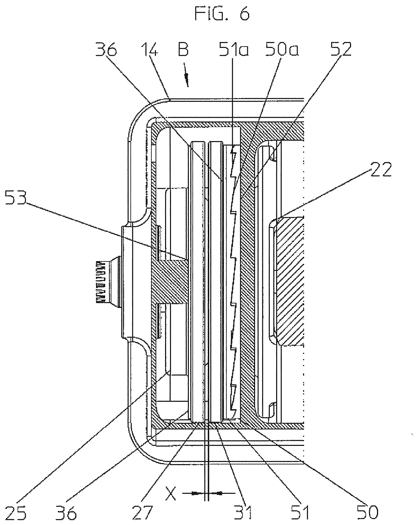

Die Funktion der Betätigung der Bremse B von Fig. 5 wird anhand der Fig. 6 bis 8 erläutert.

Fig. 6 zeigt die Schaltstellung gemäß Fig. 5, d.h. entsprechend der eingerückten Kupplung K und der gelösten Bremse B. Die beiden Zahnscheiben 50, 51 weisen an zueinander weisenden Seiten gegensinnige keilförmige Sägezähne 50a, 51a auf, die in Umfangsrichtung verteilt sind. Da in Fig. 6 die Sägezähne 50a, 51a voll ineinander eingreifen, sind die Scheiben 27, 31 unter der Federkraft 32 mit dem Abstand X voneinander beabstandet und ohne Bremseingriff mit den Bremsbacken 53 bzw. der Scheibe 51.

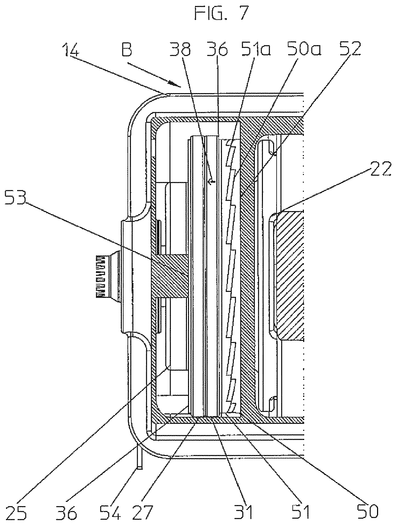

In Fig. 7 sind zur Betätigung der Bremse B und zum Ausrücken der Kupplung K die Scheiben 50, 51 relativ zueinander verdreht, beispielsweise nur die Scheibe 51 über einen Hebelmechanismus 54 relativ zur Scheibe 50, und so, dass die Sägezähne 50a, 51a aufeinander aufgeglitten sind und die Scheibe 51 mit dem Bremsbelag 36 die Scheibe 31 mit der Stellbewegung 38 gegen die Scheibe 27 und den Bremsbelag 36 presst, so dass die Scheiben 27, 31 gehäusefest blockiert sind. Die Stellbewegung 38 wird zum Ausrücken der Kupplung K auf diese übertragen.

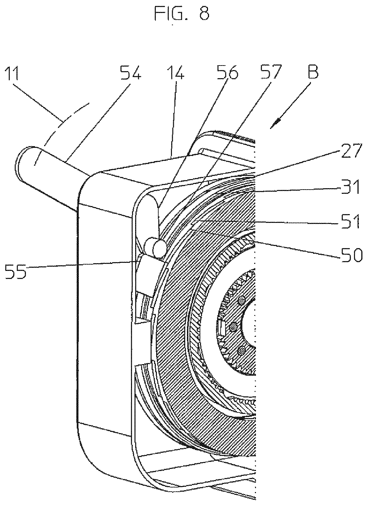

Gemäß Fig. 8 ist der Hebelmechanismus 54 am Gehäuse 14 drehbar gelagert und über eine Kurbel 56 mit einem Mitnehmer 57 verbunden, der auf einen Anschlag 55 hier an der Zahnscheibe 51 ausgerichtet ist, und diesen, gegebenenfalls gegen die Kraft einer nicht dargestellten Rückstellfeder, im Gehäuse verdreht hat. Die Betätigung 11, beispielsweise ein Seilzug, greift am Hebelmechanismus 54 an und hält die Zahnscheibe 51 in der gezeigten Stellung entsprechend Fig. 7.

Alternativ könnte die Scheibe 51 (oder in entgegengesetzter Richtung auch die Scheibe 50) auf hydraulischem Weg verdreht werden, um die Scheibenbremse zu betätigen (nicht gezeigt).

Die Scheibenbremse B könnte alternativ zwischen den Scheiben 27, 31 eingreifen. Die Scheibenbremse B könnte nach dem Prinzip z.B. der Fa. KNOTT konzipiert sein, um mit weniger Reibung die Scheiben ausdehnen zu lassen, oder nach dem Prinzip der CONAX-Bremse der Fa. DESCH mit im Querschnitt dreieckigem, am Gehäuse angreifendem Bremsmaterial und konischen Druckscheiben. Eine Trommel- oder Bandbremse wäre ebenfalls brauchbar. Stets ist vorauszusetzen, dass bei der Bremsbetätigung die Stellbewegung (Pfeil 38) gegeben ist, und die gebrembsten Teile zum Gehäuse 14 im Stillstand sind.

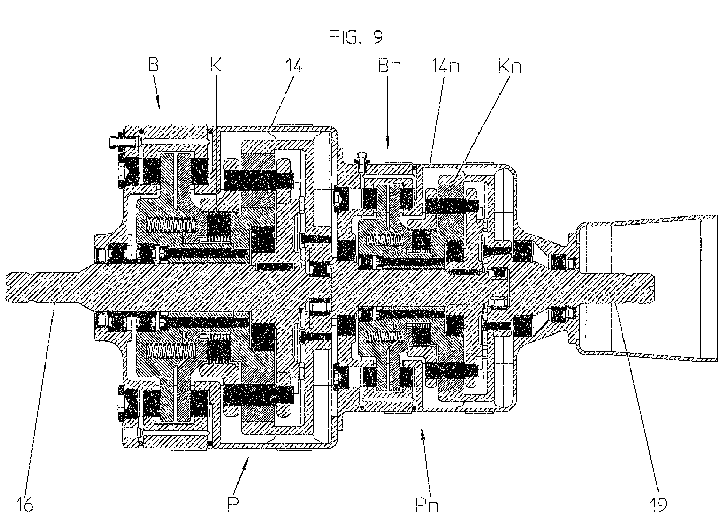

Fig. 9 verdeutlicht ein Antriebssystem des Futtermischers, das unter Nutzen des Prinzips des vorerwähnten Planetengetriebes P mehr als zwei unterschiedliche Übersetzungen schalten lässt. Und zwar sind in Fig. 9 zwei beispielsweise unterschiedlich große Planetengetriebe P und Pₙ hintereinander zwischen die ersten und zweiten Wellen 16, 19 geschaltet, deren jedes eine mechanische Kupplung K, Kn und eine Bremse B, B_{N}, aufweist. Zweckmäßig ist das größere Planetengetriebe P näher beim Mischorgan M verbaut.

Sind beide Bremsen B, Bₙ nicht betätigt, und die beiden Kupplungen K, Kₙ eingerückt, ist die Übersetzung 1:1. Ist beispielsweise die Bremse B, d.h. die auf größerem Durchmesser wirkende Bremse B, betätigt, beträgt die Untersetzung beispielsweise 1,7:1 bis 1,8:1. Sind beide Bremsen B, B_{N} betätigt, und beide Kupplungen K, Kₙ ausgerückt, beträgt die Untersetzung beispielsweise 1,7:1x1,7:1. Bei ungleichem Verhältnis der Planetengetriebe P, Pn könnte sogar eine vierte Geschwindigkeitsstufe geschaltet werden. Falls noch mehr Untersetzungen gewünscht werden, könnten mehr als zwei Planetengetriebe hintereinander geschaltet werden.

## Patentansprüche

1. Futtermischer (F) mit wenigstens einem drehantreibbaren Mischorgan (M) und wenigstens einem am Futtermischer (F) angeordneten, das Mischorgan antreibenden Planetengetriebe, das als Drehmoment-Übertragungs-Komponenten in einem Gehäuse (14) ein Sonnenrad (25), einen Planetenradträger (22) mit Planetenrädern (23) und ein Außenrad (24) aufweist und das unter Last mit wenigstens einer Kupplung (K) zwischen mindestens zwei Übersetzungen schaltbar ist, **dadurch gekennzeichnet, dass** das Planetengetriebe (P) im Gehäuse (14) eine einzige Kupplung (K) zwischen zweien (25, 22 oder 22, 24) der Komponenten und am Gehäuse (14) eine am Futtermischer (F) betätigbare Bremse (B) aufweist, mit der wahlweise sowohl eine der zwei Komponenten relativ zum Futtermischer (F) blockierbar als auch die Kupplung (K) ausrückbar sind, wobei die Bremse (B) mit einer Stellbewegung (38) mechanisch oder hydraulisch oder elektrisch oder pneumatisch betätigbar ist und die Kupplung (K) unter Federkraft (26) selbsttätig einrückbar und durch die Stellbewegung (38) bei Betätigung der Bremse (B) indirekt ausrückbar ist.

2. Futtermischer nach Anspruch 1, **dadurch gekennzeichnet, dass** die Bremse (B) eine Scheibenbremse ist.

3. Futtermischer nach Anspruch 1, **dadurch gekennzeichnet, dass** die zum Ausrücken der Kupplung (K) eingesetzte Bremskraft der Bremse (B) größer ist als die Federkraft (26) zum Einrücken der Kupplung (K), und dass im Planetengetriebe (P) eine axiale Stellbewegung (38) der Bremse (B) mechanisch auf die Kupplung (K) übertragbar ist.

4. Futtermischer nach Anspruch 1, **dadurch gekennzeichnet, dass** die Kupplung (K) entweder zwischen dem Sonnenrad (25) und dem Planetenradträger (22) und die Bremse (B) am Sonnenrad (25) oder die Kupplung (K) zwischen dem Planetenradträger (22) und dem Außenrad (24) und die Bremse (B) am Außenrad (24) angreifen.

5. Futtermischer nach wenigstens einem der vorhergehenden Ansprüche, **dadurch gekennzeichnet, dass** eine im Gehäuse (14) gelagerte zweite Welle (19) im Planetengetriebe (P), vorzugsweise eine Eingangswelle, mit dem Außenrad (24) oder dem Sonnenrad (25) und eine koaxiale und ebenfalls im Gehäuse (14) gelagerte erste Welle (16) mit dem Planetenradträger (22) verbunden sind, und dass, vorzugsweise, das Sonnenrad (25) oder das Außenrad (24) auf der zweiten Welle (19) oder der ersten Welle (16) und dem Planetenradträger (22) drehgelagert ist.

6. Futtermischer nach Anspruch 1, **dadurch gekennzeichnet, dass** die Kupplung (K) wechselweise mit den zwei Komponenten drehfest verbundene, verschiebbare Kupplungs-Ringlamellen (34) aufweist, die zwischen einer durch die von der betätigten Bremse (B) übertragene Stellbewegung (38) axial beweglichen Kupplungsdruckplatte (31), 31') und einem Anschlag (33) in einer der zwei Komponenten angeordnet sind.

7. Futtermischer nach wenigstens einem der vorhergehenden Ansprüche, **dadurch gekennzeichnet, dass** für mehr als zwei im Planetengetriebe (P) schaltbare Übersetzungen zwischen den ersten und zweiten Wellen (16, 19) mindestens zwei Planetengetriebe (P, Pₙ), jeweils mit einer mechanischen Kupplung (K, Kₙ) und einer mechanisch oder hydraulisch betätigbaren Bremse (B, Bₙ) hintereinander geschaltet sind, vorzugsweise das jeweils größere Planetengetriebe näher beim Mischorgan (M).

8. Futtermischer nach Anspruch 1, **dadurch gekennzeichnet, dass** die Bremse (B) zwei koaxiale Scheiben (31, 31', 27) und mindestens zwei gegenüberliegende, mit der Stellbewegung (38) von außen gegen die Scheiben anpressbare Bremsbacken (35) im Gehäuse (14) aufweist, dass die Scheiben mit einer der zwei Komponenten mitdrehbar verbunden und bei eingerückter Kupplung (K) voneinander beabstandet (X) sind, und dass eine Scheibe (31, 31') entweder die von der Federkraft (26) der Kupplung (K, Kₙ) beaufschlagte Kupplungsdruckplatte bildet oder über Anschläge (49) an einer separaten Kupplungsdruckplatte (31) ansteht.

9. Futtermischer nach Anspruch 7 oder 8, **dadurch gekennzeichnet, dass** die Bremsbacken (35) der hydraulisch betätigbaren Bremse (B) durch Kolben in gehäusefesten Hydraulikzylindern (37) oder der mechanisch betätigbaren Bremse (B) durch einen Hebelmechanismus (54, 56) am Gehäuse (14) betätigbar sind, vorzugsweise gegen in Löserichtung wirkende Rückstellkräfte.

10. Futtermischer nach Anspruch 1, **dadurch gekennzeichnet, dass** die Bremse (B) zwei an sich gehäusefeste, aneinander anliegende Zahnscheiben (50, 51) mit jeweils in Umfangsrichtung verteilten, gegensinnigen und zueinander weisenden keilförmigen Sägezähnen (50a, 51a) aufweist, die im Gehäuse (14) hydraulisch oder durch wenigstens einen Hebelmechanismus (54, 56) relativ zueinander unter Aufgleiten der Sägezähne (50a, 51a) und Erzeugen der Stellbewegung (38) begrenzt verdrehbar sind, dass eine Zahnscheibe (51) unter der Stellbewegung (38) mit einem Bremsbelag (36) gegen die Kupplungsdruckplatte (31) pressbar ist und die Kupplungsdruckplatte (31) gegen eine Scheibe (27) der einen Komponente, vorzugsweise des Sonnenrads (25), anlegt, und diese Scheibe (27) über einem Bremsbelag (36) gegen wenigstens einen gehäusefesten Bremsbacken (53) oder eine gehäusefeste Bremsfläche presst.

11. Futtermischer nach Anspruch 9 oder 10, **dadurch gekennzeichnet, dass** der Hebelmechanismus (54, 56) zumindest bei betätigter Bremse (B) am Gehäuse (14) oder in einem Schlepper (S) verrastet, verriegelt oder in einer selbsthaltenden Übertotpunktlage ist.

12. Futtermischer nach wenigstens einem der vorhergehenden Ansprüche, **dadurch gekennzeichnet, dass** im Gehäuse (14) wenigstens ein mit einer Steuerung verbundener Sensor (48) zumindest zur Überwachung der ordnungsgemäßen blockierenden Bremsfunktion der betätigten Bremse (B) vorgesehen ist, vorzugsweise in Ausrichtung auf eine der Scheiben.

13. Futtermischer nach wenigstens einem der vorhergehenden Ansprüche, **dadurch gekennzeichnet, dass** eine Hydraulikschaltung (11) einer hydraulischen Bremsbetätigung der Bremse (B) eine an ein magnetbetätigtes Mehrwegeventil (40), vorzugsweise ein 4/3-Wegeventil mit blockierender Neutralstellung, angeschlossene Hydraulikleitung (41) aufweist, in der zwischen einem Stromregelventil (45), vorzugsweise mit einer Regelblende (46) und einem parallelen, in Strömungsrichtung zum Mehrwegeventil (40) öffnenden Rückschlagventil (47), sowie gegebenenfalls einem an die Hydraulikleitung (41) angeschlossenen Druckspeicher (44), und dem Mehrwegeventil (40) ein in Strömungsrichtung zum Mehrwegeventil (40) sperrendes, über das Mehrwegeventil (40) hydraulisch entsperrbares Rückschlagventil (43) angeordnet ist.

14. Futtermischer nach Anspruch 13, **dadurch gekennzeichnet, dass** das Mehrwegeventil (40) ein Schlepperventil im Hydrauliksystem (39) eines an dem fahrbar ausgebildeten Futtermischer (F) oder mit dem stationär eingesetzten Futtermischer (F) gekoppelten, eine Welle (16, 19) des Planetengetriebes (P) antreibenden Schleppers (S) ist.

15. Futtermischer nach Anspruch 9 oder 10, **dadurch gekennzeichnet, dass** der Hebelmechanismus (54, 56) über einen Seilzug oder dergleichen am Futtermischer (F) oder in einem dem Futtermischer (F) zugeordneten Schlepper (S) betätigbar ist.

## Claims

1. A feed mixer (F) comprising at least one rotatably drivable mixing member (M) and at least one planetary gear arranged on the feed mixer (F) and driving the mixing member, said planetary gear comprising a sun gear (25), a planetary gear carrier (22) with planetary gears (23) and a ring gear (24) as torque transmitting components in a housing (14) and being adapted to be shifted under load with at least one clutch (K) between at least two gear ratios, **characterized in that** the planetary gear (P) comprises in the housing (14) a single clutch (K) between two (25, 22 or 22, 24) of the components and on the housing (14) a brake (B), which is actuable on the feed mixer (F) and which can be used for optionally blocking one of the two components relative to the feed mixer (F) as well as for disengaging the clutch (K), wherein the brake (B) is mechanically or hydraulically or electrically or pneumatically actuable by a positioning movement (38), and the clutch (K) is automatically engageable under the force of a spring (26) and is indirectly disengageable by the positioning movement (38) when the brake (B) is operated.

2. The feed mixer according to claim 1, **characterized in that** the brake (B) is a disk brake.

3. The feed mixer according to claim 2, **characterized in that** the braking force of the brake (B) used for disengaging the clutch (K) exceeds the spring force (26) used for engaging the clutch (K), and that in the planetary gear (P), an axial positioning movement (38) of the brake (B) can be transmitted mechanically to the clutch (K).

4. The feed mixer according to claim 1, **characterized in that** the clutch (K) is effective either between the sun gear (25) and the planetary gear carrier (22) and the brake (B) acts on the sun gear (25) or that the clutch (K) is effective between the planetary gear carrier (22) and the ring gear (24) and the brake (B) acts on the ring gear (24).

5. The feed mixer according to at least one of the preceding claims, **characterized in that** in the planetary gear (P), a second shaft (19), preferably an input shaft, which is supported in the housing (14), is connected to the ring gear (24) or the sun gear (25), and a first coaxial shaft (16), which is also supported in the housing (14), is connected to the planetary gear carrier (22), and that, preferably, the sun gear (25) or the ring gear (24) is rotatably supported on the second shaft (19) or on the first shaft (16) and the planetary gear carrier (22).

6. The feed mixer according to claim 1, **characterized in that** the clutch (K) comprises displaceable clutch ring disks (34), which are alternately connected to the two components in a rotationally fixed manner and which are arranged between a clutch pressure plate (31, 31') and a stop (33) in one of the two components, said clutch pressure plate being axially movable by the positioning movement (38) transmitted by the actuated brake (B).

7. The feed mixer according to at least one of the preceding claims, **characterized in that** for allowing more than two gear ratios to be shifted in the planetary gear (P), at least two planetary gears (P, Pₙ) are arranged in succession between the first and second shafts (16, 19), each comprising a mechanical clutch (K, Kₙ) and a mechanically or hydraulically actuable brake (B, Bₙ), the respective larger planetary gear being preferably arranged closer to the mixing member (M).

8. The feed mixer according to claim 1, **characterized in that** the brake (B) comprises, in the housing (14), two coaxial disks (31, 31', 27) and at least two opposed brake shoes (35) which are adapted to be pressed with the positioning movement (38) against said disks from outside, that the disks are connected to one of the two components such that they are rotatable together therewith and are spaced apart (X) in the engaged condition of the clutch (K), and that one disk (31, 31') defines either the clutch pressure plate, which is acted upon by the spring force (26) of the clutch (K, Kₙ), or abuts on a separate clutch pressure plate (31) via stops (49).

9. The feed mixer according to claim 7 or 8, **characterized in that** the brake shoes (35) of the hydraulically operable brake (B) are operable by pistons in hydraulic cylinders (37) constituting a fixed part of the housing or that brake shoes (35) of the mechanically operable brake (B) are operable by a lever mechanism (54, 56) on the housing (14), preferably against resetting forces acting in a release direction.

10. The feed mixer according to claim 1, **characterized in that** the brake (B) comprises two toothed washers (50, 51), which abut on one another and constitute fixed parts of the housing and which each have circumferentially distributed, oppositely directed, wedge-shaped sawteeth (50a, 51a) that face one another, said toothed washers (50, 51) being adapted to be rotatably displaced relative to one another to a limited extent within the housing (14) hydraulically or by at least one lever mechanism (54, 56) while the sawteeth (50a, 51a) slip on one another and while the positioning movement (38) is being produced, that a toothed washer (51) is adapted to be pressed with a brake pad (36) against the clutch pressure plate (31) while the positioning movement (38) is taking place, and moves the clutch pressure plate (31) into contact with a disk (27) of one of the components, preferably of the sun gear (25), and presses this disk (27) via a brake pad (36) against at least one brake shoe (53) constituting a fixed part of the housing or a braking surface constituting a fixed part of the housing.

11. The feed mixer according to claim 9 or 10, **characterized in that,** at least with the brake (B) applied, the lever mechanism (54, 56) is blocked, locked in place or occupies a self-retaining beyond-dead-center position on the housing (14) or in a tractor (S).

12. The feed mixer according to at least one of the preceding claims, **characterized in that** the housing (14) has provided therein at least one sensor (48), which communicates with a control and which is used at least for monitoring the duly blocking braking function of the applied brake (B), preferably in orientation with respect to one of the disks.

13. The feed mixer according to at least one of the preceding claims, **characterized in that** a hydraulic circuit (11) of a hydraulic brake actuation of the brake (B) comprises a hydraulic line (41) connected to a magnetically operated manifold valve (40), preferably a 4/3-way valve with a blocking neutral position, the hydraulic line (41) having provided therein a check valve (43), which shuts off in the flow direction towards the manifold valve (40) and which is hydraulically unlockable via the manifold valve (40), said check valve (43) being arranged between a flow control valve (45) comprising preferably a control orifice (46) and a parallel check valve (47), which opens in the flow direction towards the manifold valve (40), and optionally a pressure reservoir (44) connected to the hydraulic line (41), and the manifold valve (40).

14. The feed mixer according to claim 13, **characterized in that** the manifold valve (40) is a tractor valve in the hydraulic system (39) of a tractor (S) coupled to the mobile feed mixer (F) or to the stationary feed mixer (F) and driving a shaft (16, 19) of the planetary gear (P).

15. The feed mixer according to claim 9 or 10, **characterized in that** the lever mechanism (54, 56) is operable via a Bowden cable or the like on the feed mixer (F) or in a tractor (S) associated with the feed mixer (F).

## Revendications

1. Mélangeuse de fourrage (F) comprenant au moins un organe mélangeur (M) pouvant être entrainé en rotation, et au moins une transmission à train planétaire, qui est agencée sur la mélangeuse de fourrage (F), entraîne l'organe mélangeur, et présente dans un carter (14), en tant que composants de transmission de couple, une roue centrale (25), un porte-satellites (22) avec des satellites (23), et une roue extérieure ou couronne extérieure (24), et qui peut être commutée sous charge entre au moins deux rapports de transmission au moyen d'au moins un embrayage (K), **caractérisée en ce que** la transmission à train planétaire (P) dans le carter (14) présente un seul embrayage (K) entre respectivement deux (25, 22 ou 22, 24) des composants, et sur le carter (14), un frein (B) pouvant être actionné sur la mélangeuse de fourrage (F), à l'aide duquel il est possible, sélectivement, aussi bien de bloquer l'un des deux composants par rapport à la mélangeuse de fourrage (F), que de débrayer l'embrayage (K), le frein (B) pouvant être actionné par un mouvement de réglage (38), par voie mécanique ou hydraulique ou électrique ou pneumatique, et l'embrayage (K) pouvant être embrayé de manière automatique sous l'effet d'une force de ressort (26) et être débrayé indirectement par le mouvement de réglage (38), lors de l'actionnement du frein (B).

2. Mélangeuse de fourrage selon la revendication 1, **caractérisée en ce que** le frein (B) est un frein à disque.

3. Mélangeuse de fourrage selon la revendication 1, **caractérisée en ce que** la force de freinage du frein (B) mise en œuvre pour débrayer l'embrayage (K), est supérieure à la force de ressort (26) pour embrayer l'embrayage (K), et **en ce que** dans la transmission à train planétaire (P), un mouvement de réglage axial (38) du frein (B) peut être transmis mécaniquement à l'embrayage (K).

4. Mélangeuse de fourrage selon la revendication 1, **caractérisée en ce que** l'embrayage (K) agit entre la roue centrale (25) et le porte-satellites (22), et le frein (B) sur la roue centrale (25), ou bien l'embrayage (K) agit entre le porte-satellites (22) et la couronne extérieure (24), et le frein (B) sur la couronne extérieure (24).

5. Mélangeuse de fourrage selon l'une au moins des revendications précédentes, **caractérisée en ce qu'**un deuxième arbre (19) monté dans le carter (14) dans la transmission à train planétaire (P), de préférence un arbre d'entrée, est relié à la couronne extérieure (24) ou à la roue centrale (25), et un premier arbre (16) coaxial et également monté dans le carter (14), est relié au porte-satellites (22), et **en ce que**, de préférence, la roue centrale (25) ou la couronne (24) est montée rotative sur le deuxième arbre (19) ou le premier arbre (16) et le porte-satellites (22).

6. Mélangeuse de fourrage selon la revendication 1, **caractérisée en ce que** l'embrayage (K) présente des disques annulaires d'embrayage (34) pouvant coulisser et liés en rotation, de manière alternée, aux deux composants, et qui sont agencés dans l'un des deux composants entre un plateau de pression d'embrayage (31, 31') mobile axialement sous l'effet du mouvement de réglage (38) transmis par le frein (B) actionné, et une butée (33).

7. Mélangeuse de fourrage selon l'une au moins des revendications précédentes, **caractérisée en ce que** pour plus de deux rapports de transmission pouvant être commutés dans la transmission à train planétaire (P) entre les premiers et deuxièmes arbres (16, 19), au moins deux transmissions à train planétaire (P, Pn), chacune respectivement avec un embrayage mécanique (K, Kn) et un frein (B, Bn) pouvant être actionné par voie mécanique ou hydraulique, sont montées l'une à la suite de l'autre, de préférence la transmission à train planétaire la plus grande de manière plus proche de l'organe mélangeur (M).

8. Mélangeuse de fourrage selon la revendication 1, **caractérisée en ce que** le frein (B) comprend dans le carter (14), deux disques coaxiaux (31, 31', 27) et au moins deux patins de frein (35) opposés, qui peuvent être pressés de l'extérieur contre les disques par le mouvement de réglage (38), **en ce que** les disques sont reliés à l'un des deux composants de manière à pouvoir tourner avec lui et sont espacés (X) l'un de l'autre lorsque l'embrayage (K) est en position embrayée, et **en ce qu'**un disque (31, 31') forme le plateau de pression d'embrayage sollicité par la force de ressort (26) de l'embrayage (K, Kn), ou bien s'appuie par l'intermédiaire de butées (49), contre un plateau de pression d'embrayage (31) séparé.

9. Mélangeuse de fourrage selon la revendication 7 ou la revendication 8, **caractérisée en ce que** les patins de frein (35) du frein (B) pouvant être actionné par voie hydraulique, peuvent être actionnés au moyen de pistons dans des cylindres hydrauliques (37) fixes avec le carter, ou bien les patins de frein du frein (B) pouvant être actionné par voie mécanique, peuvent être actionnés au moyen d'un mécanisme à leviers (54, 56) sur le carter (14), de préférence à l'encontre de forces de rappel agissant dans la direction de desserrage.

10. Mélangeuse de fourrage selon la revendication 1, **caractérisée en ce que** le frein (B) présente deux disques dentés (50, 51) s'appliquant l'un contre l'autre, fixes en soi avec le carter, qui comportent respectivement des dents de scie (50a, 51a) en forme de coin dirigées les unes vers les autres, de sens opposé et réparties dans la direction périphérique, et qui peuvent tourner de manière limitée l'un par rapport à l'autre dans le carter (14), hydrauliquement ou par au moins un mécanisme à leviers (54, 56), avec glissement des dents de scie (50a, 51a) les unes sur les autres et en produisant le mouvement de réglage (38), **en ce qu'**un disque denté (51) peut être pressé, sous l'effet du mouvement de réglage (38), avec une garniture de frein (36), contre le plateau de pression d'embrayage (31), et le plateau de pression d'embrayage (31) vient s'appliquer contre un disque (27) de l'un des composants, de préférence de la roue centrale (25), et ce disque (27) presse, par l'intermédiaire d'une garniture de frein (36), contre au moins un patin de frein (53) fixe avec le carter ou une surface de freinage fixe avec le carter.

11. Mélangeuse de fourrage selon la revendication 9 ou la revendication 10, **caractérisée en ce que** le mécanisme à leviers (54, 56) est, au moins lorsque le frein (B) est actionné, encliqueté, verrouillé ou se trouve dans une position de passage de point mort haut automaintenue, sur le carter (14) ou dans un tracteur (S) .

12. Mélangeuse de fourrage selon l'une au moins des revendications précédentes, **caractérisée en ce que** dans le carter (14) il est prévu au moins un capteur (48) relié à une commande, qui est au moins destiné à la surveillance de la fonction de freinage de blocage correcte du frein (B) actionné, et de préférence orienté en direction d'un des disques.

13. Mélangeuse de fourrage selon l'une au moins des revendications précédentes, **caractérisée en ce qu'**un circuit hydraulique (11) d'un actionnement de frein hydraulique du frein (B), présente une conduite hydraulique (41), qui est raccordée à une vanne à voies multiples (40) actionnée par voie magnétique, de préférence une vanne 4/3 voies avec une position neutre de blocage, et dans laquelle est agencée, entre d'une part une vanne de régulation de débit (45), de préférence avec un diaphragme de régulation (46), et, en parallèle, une valve antiretour (47) ouvrant dans le sens d'écoulement vers la vanne à voies multiples (40), ainsi que, le cas échéant, un accumulateur de pression (44) raccordé à la conduite hydraulique (41), et d'autre part la vanne à voies multiples (40), une valve antiretour (43) bloquant dans le sens d'écoulement vers la vanne à voies multiples (40) et pouvant être débloquée hydrauliquement par l'intermédiaire de la vanne à voies multiples (40).

14. Mélangeuse de fourrage selon la revendication 13, **caractérisée en ce que** la vanne à voies multiples (40) est une vanne de tracteur dans le système hydraulique (39) d'un tracteur (S), qui est couplé à la mélangeuse de fourrage (F) réalisée sous forme roulante ou bien à la mélangeuse de fourrage (F) utilisée de manière stationnaire, et qui entraine un arbre (16, 19) de la transmission à train planétaire (P).

15. Mélangeuse de fourrage selon la revendication 9 ou la revendication 10, **caractérisée en ce que** le mécanisme à leviers (54, 56) peut être actionné par l'intermédiaire d'un système à câble de commande ou similaire sur la mélangeuse de fourrage (F) ou dans un tracteur (S) associé à la mélangeuse de fourrage (F).
